# DEMANDE DE BREVET EUROPEEN

(11) **EP 2 743 706 A1**
(43) Date de publication de la demande: **18.06.2014**
(21) Numéro de dépôt: 13196543.6
(22) Date de dépôt: 10.12.2013
(51) Int. Cl.: G01P 5/14, G01P 5/165, G01P 13/02, G05B 9/00, G05D 1/00

(54) **Système pour la fourniture d'estimations de paramètres de vol d'un aéronef indépendantes et dissimilaires et aéronef associé.**

(30) Priorité: 11.12.2012 FR 1203365
(71) Demandeur: Thales, 92200 Neuilly Sur Seine (FR)
(72) Inventeur: Colliau, Florent, 92362 Meudon La Foret (FR); Flaven, Cédric, 92362 Meudon La Foret (FR); Jaulain, Yves, 92362 Meudon La Foret (FR)
(74) Mandataire: Domenego, Bertrand

(57) **Abrégé**

Système d'estimation de paramètres de vol d'un aéronef (12), comprenant une pluralité de prises de pression statique et une pluralité de sondes de mesure, chaque sonde de mesure comprenant une partie aérienne (24) et un dispositif électronique configuré pour estimer les paramètres de vols.

Une première (141) et une deuxième sonde (142) possèdent des parties aériennes et des dispositifs électroniques identiques, une troisième sonde (143) possède une partie aérienne et un dispositif électronique différents de ceux de la première sonde (141); les dispositifs électroniques des première, deuxième et troisième sondes et les prises de pression statique sont reliés de manière à former un premier, un deuxième et un troisième systèmes de données respectivement associés à une prise de pression statique, et chaque prise de pression statique de chacun des systèmes de données est distincte de chaque prise de pression statique des autres systèmes de données.

## Description

La présente invention concerne les systèmes de fourniture de données de vol d'un aéronef.

Plus précisément, l'invention concerne un système d'estimation de paramètres de vol d'un aéronef, comprenant
- une pluralité de prises de pression statique ;
- une pluralité de sondes de mesure, chaque sonde de mesure comprenant une partie aérienne propre à fournir au moins une grandeur physique corrélée aux paramètres de vols et différente de la pression statique, et un dispositif électronique configuré pour estimer les paramètres de vols à partir des grandeurs physiques et d'au moins une mesure de pression statique.

L'invention se situe dans le domaine des systèmes de mesure en charge de l'acquisition et de la mesure des pressions statiques et dynamiques locales et de l'incidence locale d'un aéronef, de la correction de ces informations du fait des phénomènes aérodynamiques auxquels est soumis cet aéronef, et du calcul des paramètres de vol à partir desquels le pilotage de l'aéronef est réalisé : l'altitude, l'angle d'incidence, les différentes vitesses de l'air, etc.

Pour des raisons de maintenance, de poids et de fiabilité, ces systèmes reposent de plus en plus sur l'utilisation de sondes de mesure multifonctions électroniques, ou sondes MFE, dont la partie aérienne est protubérante de la peau de l'aéronef et fournit au moins des informations de pression totale et d'angle d'incidence. La partie aérienne est couplée au dispositif électronique qui est interne à l'aéronef, et qui réalise le calcul des différents paramètres de vol à partir notamment des informations délivrées par la partie aérienne, mais aussi d'une ou plusieurs mesures de la pression statique et de la température totale de l'air.

Le niveau de sécurité élevé se traduit notamment par des exigences en matière d'indépendance au niveau des paramètres fournis par ces systèmes et de dissimilarité des éléments qu'ils comprennent.

Un tel système est par exemple décrit dans le document US 6 668 640 B1 qui décrit un système de fourniture de données de paramètres de vol selon deux voies de données. Les paramètres fournis selon l'une des voies de données sont indépendants de ceux fournis par l'autre voie de données, c'est-à-dire qu'ils sont déterminés à partir de sources d'informations de pression statique distinctes. Afin d'éviter la perte de toutes les voies de données en cas d'éventuelle panne de mode commun, les deux voies de données sont différentes.

L'un des objets de l'invention est de proposer une architecture alternative pour ce type de système de fourniture de paramètres de vol.

A cet effet, l'invention concerne un système du type précité, dans lequel :
- une première sonde de mesure et une deuxième sonde de mesure possèdent des parties aériennes identiques et des dispositifs électroniques identiques ;
- une troisième sonde de mesure possède une partie aérienne et un dispositif électronique différents de ceux de la première sonde de mesure et de la deuxième sonde de mesure ;
- les dispositifs électroniques de la première sonde de mesure, de la deuxième sonde de mesure et de la troisième sonde de mesure et les prises de pression statique sont reliés de telle manière à former un premier système de données, un deuxième système de données et un troisième système de données respectivement associés à au moins une prise de pression statique et fournissant chacun une estimation respective des mêmes paramètres de vol,
- la ou chaque prise de pression statique de chacun du premier système de données, du deuxième système de données et du troisième système de données est distincte de la ou chaque prise de pression statique des autres parmi le premier système de données, le deuxième système de données et le troisième système de données.

Selon d'autres aspects de l'invention, le système comprend une ou plusieurs des caractéristiques techniques suivantes, prises isolément ou selon toute(s) combinaison(s) techniquement possible(s) :
- le dispositif électronique de chaque sonde de mesure comprend un premier canal électronique et un deuxième canal électronique, chacun du premier système de données, du deuxième système de données et du troisième système de données comprenant un premier canal d'une sonde de mesure et un deuxième canal d'une sonde de mesure connectés entre eux ;
- le premier système de données comprend le premier canal de la première sonde de mesure et le deuxième canal de la deuxième sonde de mesure connectés entre eux, et le deuxième système de données comprend le deuxième canal de la première sonde de mesure et le première canal de la deuxième sonde de mesure connectés entre eux ;
- le premier système de données comprend une prise pression statique sur la partie aérienne de la première sonde de mesure et une prise de pression statique disposée sur la partie aérienne de la deuxième sonde de mesure, et le deuxième système de données comprend une prise de pression statique disposée sur la partie aérienne de la deuxième sonde de mesure et une prise de pression statique disposée sur la partie aérienne de la première sonde de mesure ;
- le premier système de données comprend le premier canal de la première sonde de mesure et le deuxième canal de la première sonde de mesure, et le deuxième système de données comprend le premier canal de la deuxième sonde de mesure et le deuxième canal de la deuxième sonde de mesure ;
- le système comprend deux sondes de pression statique primaires disjointes des sondes de mesure et situées de part et d'autre de l'aéronef, les prises de pression statique du premier système de données étant situées sur l'une et l'autre desdites sondes de pression statique primaires et étant raccordées entre elles ;
- le système comprend en outre deux sondes de pression statique secondaires distinctes des sondes de mesure et situées de part et d'autre de l'aéronef, les prises de pression statique du deuxième système de données étant situées sur l'une et l'autre desdites sondes de pression statique secondaires et étant raccordées entre elles ;
- le système comprend deux sondes de pression statique disjointes des sondes de mesure et situées de part et d'autre de l'aéronef, les prises de pression statique du troisième système de données étant situées sur lesdites sondes de pression statique et étant raccordées entre elles ;
- le troisième système de données comprend le premier canal et le deuxième canal de la troisième sonde de mesure ;
- le système comprend en outre une quatrième sonde de mesure identique à la troisième sonde de mesure ;
- le système comprend un quatrième système de données associé à au moins une prise de pression statique ;
- le quatrième système de données comprend au moins une prise de pression statique commune avec le troisième système de données ;
- le troisième système de données comprend le premier canal de la troisième sonde de mesure et le deuxième canal de la quatrième sonde de mesure connectés entre eux, et le quatrième système de données comprend le deuxième canal de la troisième sonde de mesure et le premier canal de la quatrième sonde de mesure reliés entre eux ;
- le système comprend deux sondes de pression statiques tertiaires disjointes des sondes de mesure et situées de part et d'autre de l'aéronef, les prises de pression statique du quatrième système de données étant situées sur l'une et l'autre des sondes de pression statique tertiaires et étant raccordées entre elles ;
- le système comprend deux sources primaires distinctes pour l'alimentation en énergie électrique des dispositifs électroniques des sondes de mesure ;
- les canaux d'un système de données donné sont alimentés au moins par la même source primaire ;
- chaque sonde de mesure comprend un module de contrôle raccordé à au moins deux autres sondes de mesure et configuré pour fournir une information d'état de fonctionnement de la sonde de mesure à laquelle il appartient à partir de la comparaison entre les estimations des paramètres de vol fournies par les systèmes de données.

L'invention concerne également un aéronef caractérisé en ce qu'il comprend un système d'estimations de paramètres de vol selon l'invention.

L'invention sera mieux comprise à la lecture de la description détaillée qui va suivre, donnée uniquement à titre d'exemple et faite en se référant aux Figures annexées, sur lesquelles :
- la Figure 1 est une illustration schématique d'un système de fourniture de paramètres de vol selon l'invention embarqué à bord d'un aéronef selon l'invention ;
- la Figure 2 est une représentation schématique du fonctionnement du système de la Figure 1 ;
- la Figure 3 est une représentation schématique d'un système de fourniture de paramètres de vol selon une deuxième variante de l'invention ;
- la Figure 4 est une représentation schématique d'un système de fourniture de paramètres de vol selon une troisième variante de l'invention ;
- la Figure 5 est une représentation schématique d'un système de fourniture de paramètres de vol selon une quatrième variante de l'invention ;
- la Figure 6 est une représentation schématique d'un système de fourniture de paramètres de vol selon un mode de réalisation particulier de la variante de la Figure 5 ; et
- la Figure 7 est une représentation schématique d'un système de fourniture de paramètres de vol selon un autre mode de réalisation particulier de la variante de la Figure 5.

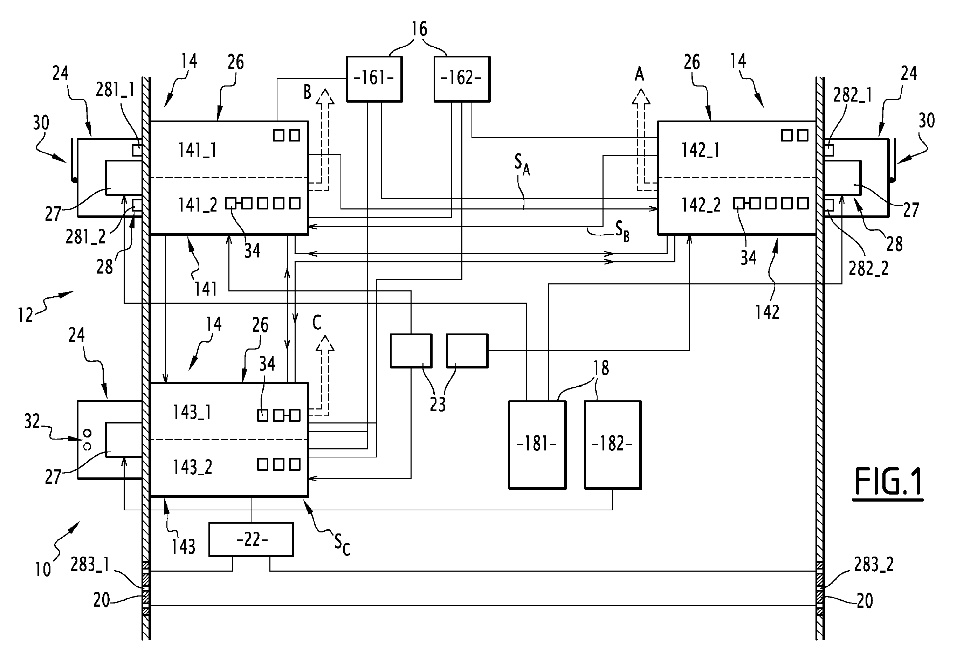

En référence à la Figure 1, le système de fourniture d'estimations de paramètres de vol 10, ci-après système 10, est destiné à être embarqué à bord d'un aéronef 12 et est propre à fournir une estimation de paramètres de vol selon trois voies de données A, B, C.

Les paramètres de vol fournis selon chacune de ces voies de données sont les mêmes.

Les paramètres de vol dont les estimations sont fournies par le système 10 comprennent plusieurs éléments du groupe formé par : la pression statique PS, la pression totale PT, l'angle d'incidence AOA, la température totale de l'air TAT, le nombre de Mach, l'angle de dérapage AOS, l'altitude ALT, l'altitude baro-corrigée, la vitesse conventionnelle, le taux de montée Vz, la vitesse VMO et le Mach MMO opérationnels maximaux (qui dépendent de l'altitude), et la vitesse air vraie TAS.

Les estimations fournies par le système via chacune des trois voies de données sont indépendantes de celles des deux autres voies de données.

Par « indépendant », on entend « fonctionnant ou étant déterminé à partir de sources d'informations de pression statique différentes».

Le système 10 comprend trois sondes de mesure multifonctions électroniques, ci-après sondes MFE.

Par « sonde multifonctions », on entend que la sonde est propre à fournir des informations au moins sur deux grandeurs physiques corrélées aux paramètres de vol, et plus précisément sur au moins la pression totale et sur l'angle d'incidence de l'aéronef.

En outre, le système 10 comprend deux sources primaires d'alimentation en énergie électrique 161, 162, ci-après sources primaires 161, 162, ainsi que deux sources secondaires d'alimentation en énergie électrique 181, 182, ci-après sources secondaires 181, 182. Le système 10 comprend également deux sondes de pression statique 20, un module de données de vol 22 et deux sondes de température de l'air 23.

Parmi les trois sondes MFE, on recense une première sonde MFE 141, une deuxième sonde MFE 141 et une troisième sonde MFE 143. Toutes les sondes MFE sont disposées au niveau de la peau de l'aéronef 12.

La première sonde MFE 141 est disposée sur l'un des côtés de l'aéronef 12, la deuxième sonde MFE 142 étant disposée sur le côté opposé. Dans l'exemple de la Figure 1, la première sonde MFE 141 se trouve à bâbord. En outre, la troisième sonde MFE 143 est également disposée sur l'un des côtés de l'aéronef, par exemple à bâbord.

Chaque sonde MFE comprend une partie aérienne 24 ainsi qu'un dispositif électronique 26 raccordé à la partie aérienne 24.

Les première et deuxièmes sondes MFE 141, 142 sont identiques, c'est-à-dire que leurs parties aériennes 24 sont identiques l'une à l'autre, et leurs dispositifs électroniques 26 sont identiques l'un à l'autre. Ceci se traduit par le fait que les numéros de pièce, ou « part numbers » en anglais, des deux sondes MFE 141, 142 sont identiques.

La troisième sonde MFE 143 et les première et deuxième sondes MFE 141, 142 sont dissimilaires.

Plus spécifiquement, la partie aérienne 24 de la troisième sonde MFE 143 est différente des parties aériennes 24 des première et deuxième sondes MFE 141, 142, et le dispositif électronique 26 de la troisième sonde MFE 143 est différent des dispositifs électroniques des première et deuxième sondes MFE 141, 142.

Par « objets différents », on entend des objets pour lesquelles une panne de mode commun est impossible, c'est-à-dire ne pouvant pas tomber en panne simultanément pour la même raison. Ceci signifie que les éléments essentiels - ceux rentrant dans la chaîne d'élaboration des paramètres - de l'un des objets, par exemple deux sondes MFE, ne sont pas présents sur l'autre objet

La partie aérienne 24 des sondes MFE est protubérante de la peau de l'aéronef 12 de telle sorte qu'elle baigne dans l'écoulement autour de l'aéronef 12 lors de son fonctionnement.

La partie aérienne 24 de toutes les sondes MFE comprend un dispositif de chauffage 27 raccordé au dispositif électronique 26 correspondant et propre à dégivrer la partie aérienne 24 lors du fonctionnement de l'aéronef 12.

Les parties aériennes 24 respectives des première et deuxième sondes MFE 141, 142 comportent chacune au moins deux prises de pression statique (représentées schématiquement) de références 281-1, 281-2, 282-1, 282-2. Les prises de pression statique sont disposées parallèlement à la carlingue de l'aéronef 12 sur la partie aérienne 24 correspondante.

En outre, la partie aérienne 24 des première et deuxième sondes MFE 141, 142 comporte au moins une prise de pression totale disposé face à l'écoulement (non représenté), et des moyens mécaniques 30 de mesure de l'incidence locale.

Dans l'exemple de la Figure 1, les moyens mécaniques 30 sont constitués d'une girouette.

En pratique, les parties aériennes 24 des première et deuxième sondes MFE 141, 142 se présentent sous la forme d'une girouette sur laquelle sont disposés les orifices décrits ci-dessus.

La partie aérienne 24 de la troisième sonde MFE 143 comprend une prise de pression totale disposée face à l'écoulement. En outre, elle comprend des moyens barométriques 32 de mesure de l'incidence locale.

Dans l'exemple de la Figure 1, les moyens barométriques 32 sont constitués de deux orifices pour l'un situé sur le dessus de la partie aérienne 24 parallèlement à l'écoulement, et pour l'autre situé sur le dessous de la partie aérienne 24 parallèlement à l'écoulement.

De manière connue, la différence entre les pressions statiques obtenues par les deux orifices permet de déduire l'incidence locale de l'aéronef 12.

Les dispositifs électroniques 26 sont propres à déterminer, à partir des informations qu'ils reçoivent des différents organes auxquels ils sont raccordés, les estimations des paramètres de vol que le système 10 fournit via les différentes voies de données A, B, C.

Les dispositifs électroniques 26 sont raccordés à un système avionique (non représenté) embarqué à bord de l'aéronef 12, qui fournit des informations nécessaires pour réaliser des corrections barométriques sélectionnées par le pilote, ainsi qu'un jeu de données externes relatives à l'état des organes mobiles de l'aéronef 12 (becs, volets, train d'atterrissage, etc.) pouvant impacter les estimations réalisées.

Les dispositifs électroniques 26 des sondes MFE comprennent chacun un premier canal électronique 141-1, 142-1, 143-1 et un deuxième canal électronique 141-2, 142-2, 143-2.

Concernant la première et la deuxième sondes 141, 142, le premier canal 141-1 de la première sonde MFE 141 est raccordé au deuxième canal 142-2 de la deuxième sonde MFE 142 pour former un premier système de données S_{A} configuré pour fournir les estimations des paramètres de vol à la voie de données A.

Le deuxième canal 141-2 de la première sonde MFE 141 est raccordé au premier canal 142-1 de la deuxième sonde MFE 142 pour former un deuxième système de donnes S_{B} configuré pour fournir les estimations des paramètres de vol à la voie de données B.

Les canaux 141-1, 141-2, 142-1, 142-2 des première et deuxième sondes MFE sont respectivement raccordés à l'une des prises de pression statique 28 de la partie aérienne 24 correspondante, une prise de pression statique étant associée à un unique canal. Ceci a pour effet que les estimations fournies par le système 10 selon chacune des trois voies A, B, C sont indépendantes de celles des deux autres voies. En outre, ceci augmente la disponibilité du système 4 du fait que qu'au moins l'une des voies de données A et B demeure disponible si l'une des prises de pression statique 28 est obturée.

En outre, le deuxième canal 141-2 de la première sonde MFE 141 est raccordé à l'une des sondes de température 23, et le deuxième canal 142-2 de la deuxième sonde MFE 142 est raccordé à l'autre sonde de température 23.

Le premier canal 141-1, 142-1 des première et deuxième sondes MFE 141, 142 comprend un capteur de pression statique propre à transformer les informations délivrées par la prise de pression statique 281-1, 282-1 correspondante en une mesure de pression statique PSAl pour le canal 141-1 et PSBr pour le canal 142-1, ainsi qu'un module de calcul configuré pour réaliser l'acquisition de la mesure de pression statique PSAl, PSBr et pour piloter la communication du canal avec le deuxième canal électronique 141-2, 142-2 auquel il est raccordé.

Le deuxième canal 141-2, 142-2 des première et deuxième sondes MFE 141, 142 comprend un capteur de pression statique propre à transformer les informations délivrées par la prise de pression statique 281-2, 282-2 correspondante en une mesure de pression statique PSBl pour le canal 141-2 et PSAr pour le canal 142-2, ainsi qu'un capteur de pression totale propre à transformer les informations délivrées par l'orifice de pression totale de sa partie aérienne 24 en une mesure de pression totale PTB pour le canal 141-2 et PTA pour le canal 142-2.

Le deuxième canal 141-2, 142-2 des première et deuxième sondes MFE 141, 142 comprend en outre un module de résolution d'angle d'incidence configuré pour transformer l'information d'angle d'incidence fournie par les moyens mécaniques 30 de la partie aérienne 24 associée en une mesure d'angle d'incidence AOAB pour le canal 141-2, et AOAA pour le canal 142-2, ainsi qu'un module de traitement configuré pour traiter toutes les données reçues par le canal 141-2, 142-2 et les mesures de pression totale, statique et d'angle d'incidence que ce canal réalise, déterminer les estimations des paramètres de vol du système SA, respectivement S_{B} et les communiquer à la voie de données A, B associée.

Par ailleurs, le deuxième canal 141-2, 142-2 des première et deuxième sondes MFE 141, 142 comprend un module de chauffage propre à piloter le dispositif de chauffage 27 de la partie aérienne 24 correspondante, et un module de contrôle 34 raccordé aux deux autres sondes MFE 14 et configuré pour déterminer une information d'état de la voie de données A, B correspondante.

Concernant la troisième sonde MFE 143, le deuxième canal 143-2 de la troisième sonde MFE 143 est raccordé au premier canal 143-1 de cette sonde MFE 143 pour former un troisième système de données S_{C} configuré pour fournir une estimation des paramètres de vol via la voie de données C.

En outre, le deuxième canal 143-2 est raccordé au module de données de vol 22 et à la sonde de température 23 qui est raccordé à la première sonde 14.

Le deuxième canal 143-2 de la troisième sonde MFE 143 comprend un capteur de pression totale et un module de résolution d'angle d'incidence respectivement configurés pour transformer les informations délivrées par la partie aérienne 24 associée en une mesure de la pression totale PTC et une mesure de l'angle d'incidence AOAC.

En outre, le deuxième canal 143-2 de la troisième sonde MFE comprend un module d'acquisition configuré pour centraliser les mesures PTC et AOAC et les données reçues du module de données de vol 22 et de la sonde de température 23 correspondants, ainsi qu'à les communiquer au premier canal 143-1 de la troisième sonde MFE.

Le premier canal 143-1 de la troisième sonde MFE 143 comprend un module de chauffage 37 pour le contrôle du dispositif de chauffage 27 de cette sonde, ainsi qu'un module de traitement propre à déterminer les estimations des paramètres de vol à partir des données transmises par le deuxième canal 143-2 et à les communiquer à la voie de données C.

En outre, le premier canal 143-1 de la troisième sonde MFE 143 comprend un module de contrôle 34 raccordé aux deux autres sondes MFE.

Les sources primaires sont propres à réaliser l'alimentation en énergie électrique des dispositifs électroniques 26 du système 10 de façon à garantir la disponibilité d'au moins une voie de données en cas de défaillance de l'une des sources primaires.

Pour ce faire, une première source primaire 161 est raccordée aux deux canaux 141-1, 142-2 du système de données SA, ainsi qu'aux deux canaux 143-1, 143-2 de la troisième sonde MFE 143.

La deuxième source primaire 162 est raccordée aux deux canaux 142-1, 141-2 du système de données B, ainsi qu'aux deux canaux 143-1, 143-2 de la troisième sonde MFE.

Ainsi, en cas de défaillance de l'une des sources primaires 161, 162, deux voies de données restent disponibles.

Les sources secondaires 181, 182 sont propres à réaliser l'alimentation en énergie électrique des dispositifs de chauffage 27 de façon à garantir la disponibilité d'un dispositif de chauffage 27 au moins en cas de panne d'une des sources secondaires 181, 182.

Pour ce faire, une première source secondaire 181 est raccordée aux systèmes de chauffage 27 des première et deuxièmes sondes MFE 141, 142, et la deuxième source secondaire 182 est raccordé au dispositif de chauffage 27 de la troisième sonde MFE 142.

Les sondes de pression statique 20 et le module de données de vol 22 sont propres à fournir au deuxième canal 143-2 de la troisième sonde MFE 143 une information de pression statique compensée pour tenir compte du dérapage de l'aéronef.

Les sondes de pression statique 20 sont situées au niveau de la peau de l'aéronef 12 de part et d'autre de celui-ci. Elles sont disposées parallèlement à la carlingue de l'aéronef.

Les sondes de pression statique 20 comprennent chacune au moins une prise de pression statique 283-1, respectivement 283-2 associées à la troisième sonde et raccordées entre elles pneumatiquement.

De manière connue, l'angle de dérapage est formé par l'axe du fuselage de l'aéronef et la trajectoire de l'aéronef. Un dérapage non nul se traduit par une contribution non nulle de la pression dynamique à la pression mesurée pour les prises orientées vers l'amont de l'écoulement, et inversement à une pression vue plus faible pour les prises orientées vers l'aval de l'écoulement.

Afin de compenser ce phénomène, les prises de pression situées d'un côté et de l'autre de l'aéronef sont raccordées entre elles pneumatiquement de façon à fournir au module de données de vol 22 une information de pression statique moyennée à partir des informations respectivement fournies par les deux sondes 20.

En variante, à chaque sonde de pression statique 20 est associé un capteur de mesure local transformant l'information de pression statique fournie par la sonde correspondante en une mesure de pression statique numérique ou analogique. Les capteurs sont alors tous deux raccordés en sortie au module de données de vol 22, qui opère la compensation du dérapage à partir des informations numériques ou analogiques.

Cette variante est avantageusement mise en oeuvre lorsqu'un raccord pneumatique entre les prises de pression statique pose des problèmes d'intégration.

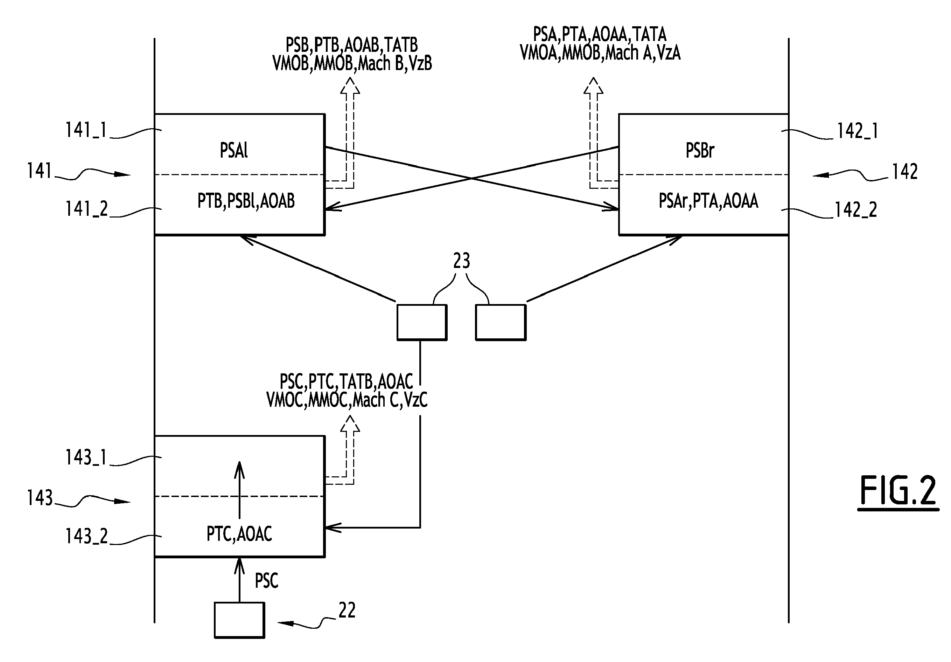

Le fonctionnement du système 10 va maintenant être décrit en référence aux Figures 1 et 2.

Lors du fonctionnement du système 10, les sources primaires 161, 162 alimentent en énergie électrique les canaux des dispositifs électroniques 26.

Les premiers canaux 141-1, 142-1 des première et deuxième sondes MFE 141, 142 déterminent une mesure de la pression statique PSAl, PSBr à partir des informations fournies par la prise de pression statique 281-1, 282-1 correspondante.

Ces mesures sont fournies au deuxième canal du 141-2, 142-2 du système de données SA, S_{B} correspondant.

Le deuxième canal 141-2, 142-2 en question détermine également une mesure de la pression statique PSBl, PSAr à partir des informations fournies par la prise de pression statique 281-2, 282-2 associée, une mesure de l'angle d'incidence AOAA, AOAB à partir des informations fournies par les moyens mécaniques 30 correspondants, et une mesure de pression totale PTA, PTB à partir des informations fournies par la prise de pression totale de la partie aérienne 24 correspondante.

Le deuxième canal 141-2,142-2 détermine des estimations des paramètres de vol à partir :
- des mesures de l'angle d'incidence AOA, AOB, de la pression statique PSBl, PSAr et de la pression totale PTA, PTB qu'il a lui-même déterminées,
- des mesures de pression statique PSAl, PSBr fournies par le premier canal 141-1 142-1 de son système de données A, B, et
- des mesures de température totale de l'air TATA, TATB fournies par la sonde de température 23 associée.

Ces estimations sont alors fournies à la voie de données A, B correspondante.

Quant à lui, le deuxième canal 143-2 de la troisième sonde MFE 143 détermine une mesure de la pression totale PTC et une mesure de l'angle d'incidence AOAC à partir des informations respectivement fournies par la prise de pression totale et les moyens barométriques 32 de la troisième sonde MFE 143, et collecte la mesure de la pression statique PSC fournie par le module de données 22.

Toutes ces données sont alors fournies au premier canal 143-1.

Le premier canal 143-1 réalise alors une estimation des paramètres de vol à partir :
- des mesures de pression totale PTC, d'angle d'incidence AOAC, et de pression statique PSC fournies par le deuxième canal 143-2, et
- de la mesure de la température totale TATB fournie par la sonde de température 23 associée.

Ces estimations sont alors transmises par le système 10 via la voie de données C.

Les systèmes de données SA, S_{B}, S_{C} fournissent alors une estimation des mêmes paramètres de vol.

En outre, les modules de contrôle 34 déterminent une information d'état de la voie à laquelle ils sont respectivement associés en comparant les estimations des paramètres de vol déterminées par le canal électronique dans lequel ils se trouvent avec les estimations déterminées par les autres canaux.

Pour ce faire, chaque module de contrôle 34 compare les estimations des paramètres de vol faites par son canal électronique avec les estimations associées aux autres voies.

Par exemple, si l'écart entre les estimations associées à sa voie de données A, B, C et les estimations fournies par les autres voies de données est supérieur à une valeur seuil pour un nombre prédéterminé de paramètres de vol, alors il transmet, via la voie de données correspondante, une information d'état indiquant que les estimations fournies par sa voie de données sont possiblement erronées.

Par ailleurs, chaque dispositif électronique 26 pilote le dispositif de chauffage 27 correspondant afin de prévenir et/ou résoudre un problème de givrage survenant sur les parties aériennes 24 correspondantes.

Le système 10 selon l'invention permet la fourniture d'estimations de paramètres de vol selon trois voies de données A, B, C indépendantes les unes des autres, et ce à partir de trois sondes MFE parmi lesquelles deux sont identiques.

En effet, la ou chaque prise de pression statique de chacun du premier système de données SA, du deuxième système de données S_{B} et du troisième de données S_{C} est distincte de la ou chaque prise de pression statique des autres parmi le premier système de données, le deuxième système de données et le troisième système de données

Ceci a pour effet que le système dispose de trois voies de données indépendantes tout en facilitant la gestion de l'inventaire afférent dans la mesure où les trois sondes MFE ne sont associées qu'à deux numéros de pièce.

En outre, du fait de la présence des modules de contrôle 34, les données fournies par le système 10 sont consolidées.

Enfin, les exigences de sûreté de fonctionnement et de sécurité sont satisfaites par le système 10.

Plusieurs variantes du mode de réalisation décrit ci-dessus sont envisageables.

Dans une première variante (non représentée), la troisième sonde MFE 143 est disposée à un emplacement sur l'aéronef au voisinage duquel le champ de pression n'est pas influencé par le dérapage de l'aéronef. De tels emplacements dépendent de l'aérodynamique de l'aéronef et sont connus de l'homme du métier.

Dans cette variante, les prises de pression statique 283-1, 283-2 associées à la troisième sonde 143 et au troisième système de données S_{C} sont situées sur la partie aérienne 24 de la troisième sonde MFE 143.

Le deuxième canal 143-2 comprend alors un capteur de pression propre à déterminer une mesure de la pression statique à partir des informations fournies par les prises de pression statique 283-1, 283-2.

En outre, le système 10 ne comprend pas de sondes de pression statique 20, ni de module de données 22. Les autres organes du système 10 sont ceux décrits en référence à la Figure 1.

A noter que dans cette variante, une seule prise de pression statique 283-1, 283-2 suffit pour assurer le bon fonctionnement du troisième système de données S_{C}.

Lors du fonctionnement du système 10 selon cette variante, le premier canal 143-1 de la troisième sonde 143 utilise la mesure de la pression statique réalisée par le deuxième canal 143-2 en lieu et place de la mesure fournie par le module de données 22 pour déterminer les estimations des paramètres de vol.

Cette variante est avantageusement mise en oeuvre afin de limiter le nombre d'organes que comprend le système.

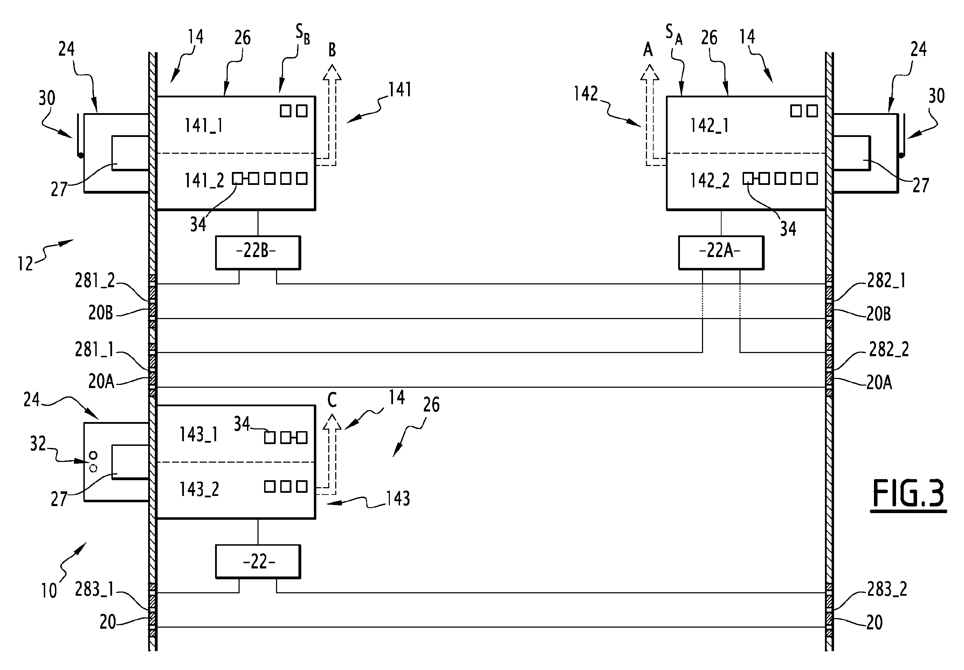

En référence à la Figure 3, dans une deuxième variante, le premier système de données S_{A} est formé par les canaux 142-1, 142-2 de la deuxième sonde 142 qui sont raccordés l'un à l'autre.

Le deuxième système de données S_{B} est formé par les canaux 141-1, 141-2 de la première sonde 141 raccordés l'un à l'autre.

En outre, les prises de pression statique 281-1, 281-2, 282-1, 282-2 associées aux première et deuxième sondes 141, 142 ne sont pas situées sur les parties aériennes 24 correspondantes.

En revanche, le système 10 comprend des sondes de pression statique primaires 20A disjointes des parties aériennes 24 et situées de part et d'autre de l'aéronef. Les prises de pression statique 281-1, 282-2 qui dans le mode de réalisation de la Figure 1 étaient associées au système de données S_{A} et étaient placées sur les parties aériennes 24 de la première, respectivement deuxième sonde MFE, sont respectivement situées sur l'une et l'autre des sondes de pression statique primaires 20A et sont raccordées l'une à l'autre pneumatiquement. En outre le système 10 comprend un module de données de vol primaire 22A raccordé aux sondes de pression statique primaires 20A et au deuxième canal 142-2 de la deuxième sonde MFE 142.

De même, le système 10 comprend des sondes de pression statique secondaires 20B disjointes des parties aériennes 24 des sondes MFE et situées de part et d'autre de l'aéronef. Les prises de pression statique 281-2, 282-1 qui dans le mode de réalisation de la Figure 1 étaient associées au système de données S_{B} et étaient placées sur les parties aériennes 24 de la première, respectivement deuxième sonde MFE, sont respectivement situées sur l'une et l'autre des sondes de pression statique secondaires 20B et sont raccordées l'une à l'autre pneumatiquement.

En outre, le système comprend un module de données de vol secondaire 22B raccordé aux prises de pression statique 20B et au deuxième canal 141-2 de la première sonde MFE 141.

En outre, le premier canal des première et deuxième sondes MFE 141, 142 n'est pas raccordé au deuxième canal de la deuxième, respectivement de la première sonde MFE.

Comme on l'aura compris, dans cette variante, les première et deuxième sondes MFE 141, 142 reçoivent des informations de pression statique de manière analogue à la manière dont la troisième sonde MFE 143 obtient les informations de pression statique dans le mode de réalisation décrit ci-dessus.

Lors du fonctionnement du système 10 selon cette variante, les sondes de pression statique 20B fournissent au module de données 22B une information de pression statique moyennée pour compenser le dérapage de l'aéronef. Le module 22B détermine une mesure de la pression statique à partir de cette information, et la communique au deuxième canal 141-2 de la première sonde, qui utilise alors cette mesure pour estimer les paramètres de vol.

Le module de données 22A mesure également la pression statique à partir des informations fournies par les sondes de pression statique 20A, et communique sa mesure au deuxième canal 142-2, qui estime les paramètres de vol à partir entre autres de cette mesure.

Cette variante est avantageusement mise en oeuvre afin de d'éviter la perte de deux voies de données en cas de givrage de la partie aérienne 24 de l'une des deux premières sondes MFE.

A noter que dans cette variante, la détermination des mesures de pression totale et/ou d'angle d'incidence qui, dans le mode de réalisation de la Figure 1, se déroulent au niveau des deuxièmes canaux 141-2, 142-2 des première et deuxième sondes 141, 142 peuvent être effectués au niveau des premiers canaux 141-1, 142-1 qui communiquent alors leur mesure au deuxième canal correspondant.

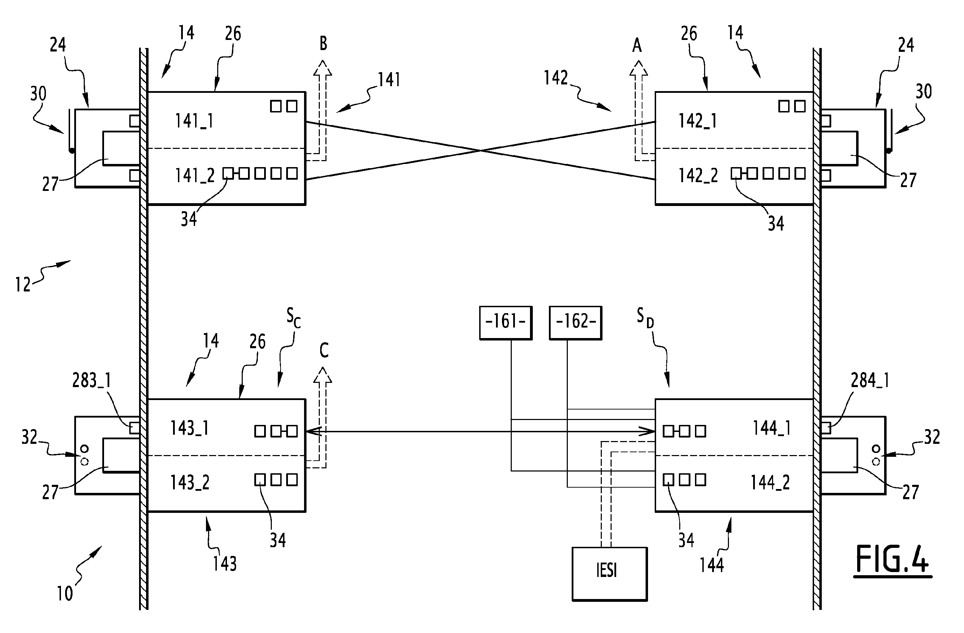

En référence à la Figure 4, dans une troisième variante, le système 10 comprend une quatrième sonde MFE 144 identique à la troisième sonde 143 et disposée sur le côté opposé de l'aéronef. La quatrième sonde MFE 144 est raccordée à la sonde de température 23 qui est raccordée à la deuxième sonde MFE 142.

En outre, le système 10 ne comprend pas de sondes de pression statique 20 ni de module de données 22 associé.

La partie aérienne 24 de la troisième sonde MFE 143 comporte au moins une prise de pression statique 283-1, la partie aérienne de la quatrième MFE 144 comportant au moins une prise de pression statique de référence 284-1.

Les canaux électroniques 144-1, 144-2 de la quatrième sonde 144 sont raccordés l'un à l'autre et forment un quatrième système de données S_{D} configuré pour fournir une estimation des paramètres de vol à un équipement de secours électronique intégré, également connu sous le nom anglophone de « Integrated Electronic Standby Instrument » et ci-après IESI, propre à fournir des informations de vol au pilote en cas de besoin

Les premiers canaux 143-1, 144-1 des troisième et quatrième sondes MFE 143, 144 sont raccordés l'un à l'autre.

Les prises de pression statique 283-1, 284-1 sont communes aux troisième et quatrième systèmes de données S_{C}, S_{D}.

Les canaux de la quatrième sonde MFE 144 sont tous deux raccordés aux deux sources primaires 161,162.

Les autres organes du système 10 sont ceux décrits en référence à la Figure 1.

Lors du fonctionnement du système selon cette variante, les premiers canaux des troisième et quatrième sondes MFE 143, 144 effectuent une mesure de la pression statique à partir des informations fournies par la prise de pression statique 283-1, 284-1 située sur la partie aérienne 24 correspondante, et échangent entre eux les mesures de pression statique qu'ils effectuent.

Chacun de ces canaux dispose ainsi de mesures de pression statique à partir desquelles il compense le dérapage de l'aéronef.

A noter que dans cette variante, les estimations fournies par le système 10 via la voie de données C et les estimations fournies à l'IESI ne sont pas indépendantes, même si elles sont *a priori* différentes.

Cette variante est avantageusement mise en oeuvre afin de bénéficier d'une source supplémentaire d'estimations de données de vol tout en minimisant le nombre d'organes et de numéros de pièce que comprend le système.

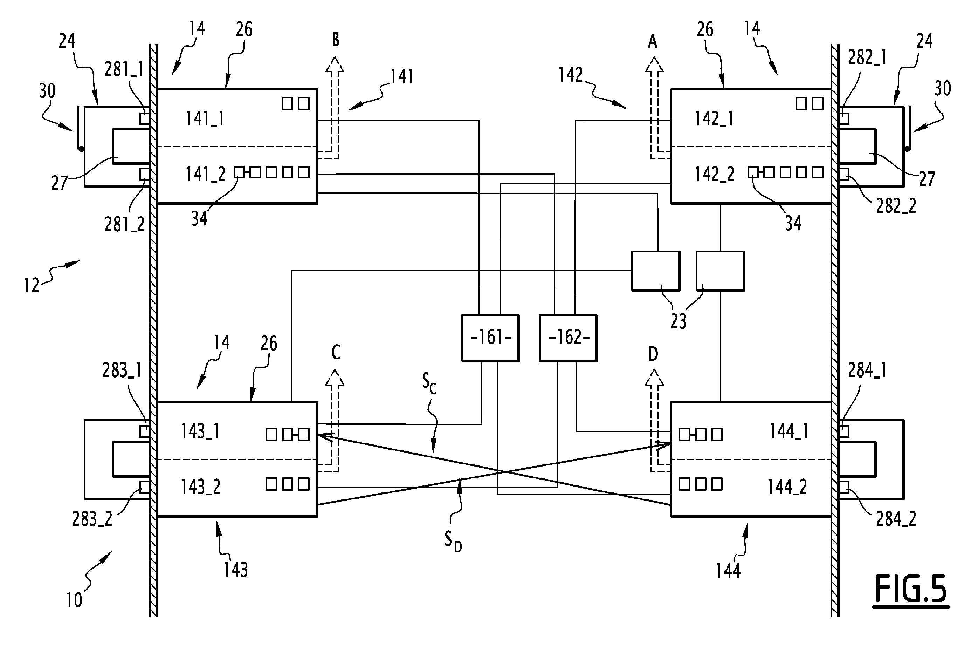

En référence à la Figure 5, dans une quatrième variante, le système 10 comprend quatre voies de données A, B, C, D indépendantes.

A cet effet, le système 10 ne comprend pas les prises de pression statique 20 ni le module de données de vol 22.

En revanche, la partie aérienne 24 de la troisième sonde MFE 143 comporte au moins une prise de pression statique 283-1 raccordée au premier canal 143-1 de la sonde 143, et au moins une prise de pression statique 283-2 raccordé au deuxième canal 143-2 de la sonde 143.

En outre, le système 10 comprend une quatrième sonde MFE 144 identique à la troisième sonde MFE 143. La quatrième sonde 144 est raccordée à la sonde de température 23 qui est raccordée la deuxième sonde MFE 142.

Le premier canal 143-1 de la troisième sonde MFE 143 est raccordé au deuxième canal 144-2 de la quatrième sonde MFE 144 pour former le troisième système de données S_{C} configuré pour fournir une estimation des paramètres de vol selon la troisième voie de données C.

Le deuxième canal 143-2 de la troisième sonde MFE 143 est raccordé au premier canal 144-1 de la quatrième sonde pour former un quatrième système de données S_{D} configuré pour fournir une estimation des paramètres de vol selon une quatrième voie de données D.

De la même manière que dans le système de la Figure 1, les systèmes de données S_{C} et S_{D} sont indépendants du point de vue de leur alimentation en énergie électrique.

Pour ce faire, les canaux 143-1, 144-2 du troisième système de données S_{C} sont raccordés à la même source primaire 161, 162, par exemple la première source primaire 161, tandis que les canaux 143-2, 144-1 du quatrième système de données S_{D} sont raccordés à l'autre source primaire, par exemple la deuxième source primaire 162.

Les autres organes du système 10 sont ceux décrits en référence à la Figure 1.

Lors du fonctionnement du système 10 selon cette variante, chaque canal 143-1, 143-2, 144-1, 144-2 des troisième et quatrième sondes MFE 143, 144 détermine une mesure de la pression statique à partir des informations délivrées par le ou les orifice de pression statique 283-1, 283-2, 284-1, 284-2 auxquels il est raccordé.

Les deuxièmes canaux 143-2, 144-2 des troisième et quatrième sondes MFE 143, 144 communiquent leur mesure de la pression statique au premier canal 143-1, 144-1 de l'autre sonde MFE 143, 144, de sorte que les premiers canaux 143-1, 144-1 disposent de mesures de pression statique à partir desquelles le dérapage de l'aéronef peut être compensé.

A noter que la mesure de pression statique effectuée par chacun des deuxièmes canaux 143-2, 144-2 des troisième et quatrième sondes MFE 143, 144 n'est pas communiquée au premier canal 143-1, 144-1 de la même sonde MFE 143, 144 afin de garantir l'indépendance des estimations fournies selon chacune des voies A, B, C, D.

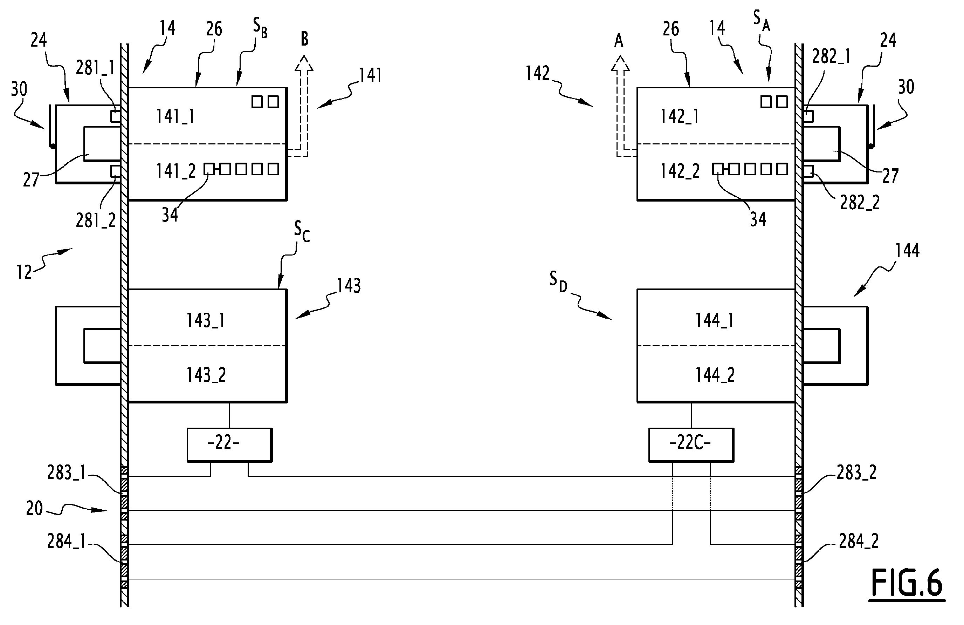

En référence à la Figure 6, dans un autre mode de réalisation de cette quatrième variante, le système 10 comprend les sondes de pression statique 20 précédemment décrites et sur lesquelles sont situées les prises de pression statique 283-1, 283-2, ainsi que le module de données de vol 22 associé..

En outre, le système 10 comprend des sondes de pression statique associées à la quatrième sonde MFE 144, ci-après sondes de pression statique tertiaires 20C, sur lesquelles les prises de pression statique 284-1, 284-1 sont situées, ainsi qu'un module de données de vol tertiaire 22C associé.

Le troisième système de données S_{C} est formé par les deux canaux 143-1, 143-2 de la troisième sonde MFE 143 qui sont raccordés l'un à l'autre.

Le quatrième système de données S_{D} est formé par les deux canaux 144-1, 144-2 de la quatrième sonde 144 qui sont raccordés l'un à l'autre.

Le troisième et le quatrième systèmes de données S_{C}, S_{D} réalisent les estimations des paramètres de vol à partir des informations de pression statique fournies par les sondes de pression statique et le module de données de vol correspondants.

Ce mode de réalisation permet, comme précédemment indiqué, de prévenir la perte de voies de données en cas de givrage des parties aériennes 24 des troisième et quatrième sondes MFE.

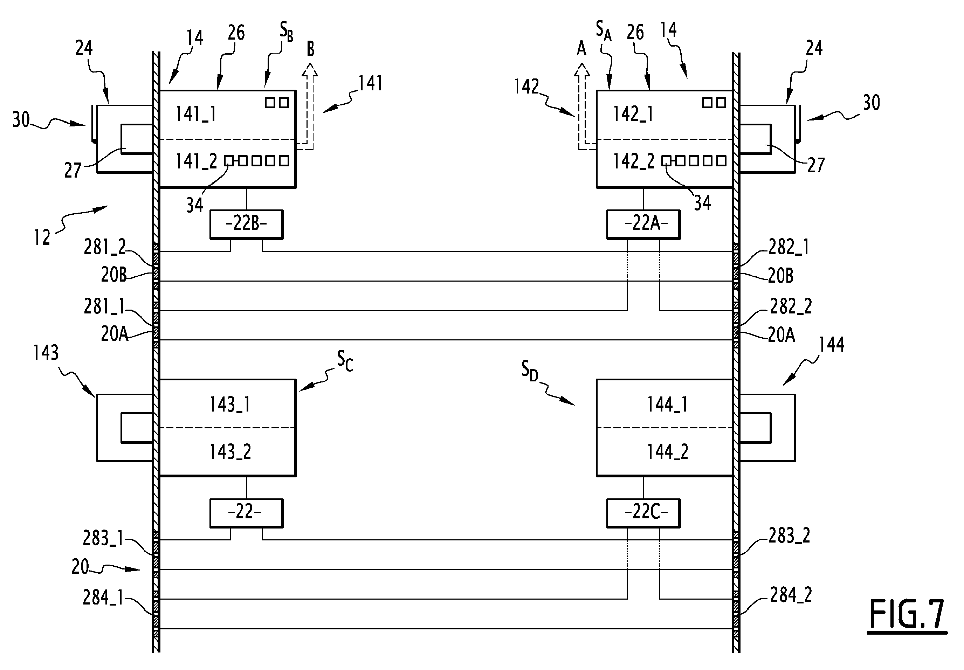

En référence à la Figure 7, dans un autre mode de réalisation de cette variante, le mode de réalisation de la Figure 3 et le mode de réalisation précédemment décrit sont combinés, c'est-à-dire qu'à chaque sonde MFE 141, 142, 143, 144 sont associés des sondes de pression statique disposées de part et d'autre de l'aéronef et sur lesquelles les prises de pression statique sont situées, ainsi qu'un module de données de vol raccordé aux sondes de pression statique et à un canal électronique de la sonde MFE considérée.

Lors du fonctionnement du système 10 selon ce mode de réalisation, chaque sonde MFE détermine ainsi directement une mesure de la pression statique tenant compte du dérapage de l'aéronef, comme décrit précédemment.

Dans d'autres modes de réalisation, le raccord pneumatique des sondes de pression statique entre elles est remplacé par un raccord de nature électrique, les sondes étant couplées à un module de données local transformant l'information de pression statique en une information numérique ou analogique représentative de la pression statique associée. La compensation du dérapage est alors effectuée à partir des informations numériques ou analogiques directement dans les canaux, comme décrit précédemment.

Dans des variantes des modes de réalisation décrits, un ou plusieurs des données de vol 22, 22A, 22B, 22C que le système 10 peut comprendre sont internes au dispositif de la sonde MFE correspondante.

## Revendications

1. Système d'estimation de paramètres de vol d'un aéronef (12), comprenant
- une pluralité de prises de pression statique (281-1, 281-2, 282-1, 282-2, 283-1, 283-2, 284-1, 284-2);
- une pluralité de sondes de mesure, chaque sonde de mesure comprenant une partie aérienne (24) propre à fournir au moins une grandeur physique corrélée aux paramètres de vols et différente de la pression statique, et un dispositif électronique (26) configuré pour estimer les paramètres de vols à partir des grandeurs physiques et d'au moins une mesure de pression statique ;
dans lequel :
- une première sonde de mesure (141) et une deuxième sonde de mesure (142) possèdent des parties aériennes (24) identiques et des dispositifs électroniques (26) identiques ;
- une troisième sonde de mesure (143) possède une partie aérienne (24) et un dispositif électronique (26) différents de ceux de la première sonde de mesure (141) et de la deuxième sonde de mesure (142) ;
- les dispositifs électroniques de la première sonde de mesure, de la deuxième sonde de mesure et de la troisième sonde de mesure et les prises de pression statique sont reliés de telle manière à former un premier système de données (SA), un deuxième système de données (S_{B}) et un troisième système de données (S_{C}) respectivement associés à au moins une prise de pression statique et fournissant chacun une estimation respective des mêmes paramètres de vol,
- la ou chaque prise de pression statique de chacun du premier système de données (SA), du deuxième système de données (S_{B}) et du troisième système de données (S_{C}) est distincte de la ou chaque prise de pression statique des autres parmi le premier système de données, le deuxième système de données et le troisième système de données.

2. Système selon la revendication 1, dans lequel le dispositif électronique (26) de chaque sonde de mesure comprend un premier canal électronique (141-1, 142-1, 143-1, 144-1) et un deuxième canal électronique, (141-2, 142-2, 143-2, 144-2) chacun du premier système de données (SA), du deuxième système de données (S_{B}) et du troisième système de données (S_{C}) comprenant un premier canal d'une sonde de mesure et un deuxième canal d'une sonde de mesure connectés entre eux.

3. Système selon la revendication 2, dans lequel le premier système de données (SA) comprend le premier canal (141-1) de la première sonde de mesure (141) et le deuxième canal (142-2) de la deuxième sonde de mesure (142) connectés entre eux, et le deuxième système de données (S_{B}) comprend le deuxième canal (141-2) de la première sonde de mesure (141) et le première canal (142-1) de la deuxième sonde de mesure (142) connectés entre eux.

4. Système selon la revendication 3, dans lequel le premier système de données (SA) comprend une prise pression statique (281-1) sur la partie aérienne (24) de la première sonde de mesure (141) et une prise de pression statique (282-2) disposée sur la partie aérienne (24) de la deuxième sonde de mesure (142), et dans lequel le deuxième système de données (S_{B}) comprend une prise de pression statique (282-1) disposée sur la partie aérienne (24) de la deuxième sonde de mesure (142) et une prise de pression statique (281-2) disposée sur la partie aérienne (24) de la première sonde de mesure (141).

5. Système selon la revendication 2, dans lequel le premier système de données (SA) comprend le premier canal (141-1) de la première sonde de mesure (141) et le deuxième canal (141-2) de la première sonde de mesure (141), et dans lequel le deuxième système de données (S_{B}) comprend le premier canal (142-1) de la deuxième sonde de mesure (142) et le deuxième canal (142-2) de la deuxième sonde de mesure (142).

6. Système selon la revendication 5, comprenant deux sondes de pression statique primaires (20A) disjointes des sondes de mesure et situées de part et d'autre de l'aéronef, les prises de pression statique du premier système de données (SA) étant situées sur l'une et l'autre desdites sondes de pression statique primaires (20A) et étant raccordées entre elles.

7. Système selon la revendications 5 ou 6, comprenant en outre deux sondes de pression statique secondaires (20B) distinctes des sondes de mesure et situées de part et d'autre de l'aéronef, les prises de pression statique du deuxième système de données (SB) étant situées sur l'une et l'autre desdites sondes de pression statique secondaires (20B) et étant raccordées entre elles.

8. Système selon l'une quelconque des revendications 1 à 8, comprenant deux sondes de pression statique (20) disjointes des sondes de mesure et situées de part et d'autre de l'aéronef, les prises de pression statique du troisième système de données (S_{C}) étant situées sur lesdites sondes de pression statique (20) et étant raccordées entre elles.

9. Système selon l'une quelconque 2 à 8, dans lequel le troisième système de données comprend le premier canal (143-1) et le deuxième canal (143-2) de la troisième sonde de mesure (143).

10. Système selon l'une quelconque des 2 à 9, comprenant en outre une quatrième sonde de mesure (144) identique à la troisième sonde de mesure (143).

11. Système selon la revendication 10, comprenant un quatrième système de données (S_{D}) associé à au moins une prise de pression statique.

12. Système selon la revendication 11, dans lequel le quatrième système de données (S_{D}) comprend au moins une prise de pression statique commune avec le troisième système de données (S_{C}).

13. Système selon la revendication 10, 11 ou 12, dans lequel :
- le troisième système de données (S_{C}) comprend le premier canal (143-1) de la troisième sonde de mesure (143) et le deuxième canal (144-2) de la quatrième sonde de mesure (144) connectés entre eux ; et
- le quatrième système de données (S_{D}) comprend le deuxième canal (143-2) de la troisième sonde de mesure (143) et le premier canal (144-1) de la quatrième sonde de mesure (144) reliés entre eux.

14. Système selon les revendications 11, 12 ou 13 combinées à la revendication 8, comprenant deux sondes de pression statiques tertiaires (20C) disjointes des sondes de mesure et situées de part et d'autre de l'aéronef, les prises de pression statique du quatrième système de données (S_{D}) étant situées sur l'une et l'autre des sondes de pression statique tertiaires (20C) et étant raccordées entre elles.

15. Système selon l'une quelconque des revendications précédentes, **caractérisé en ce qu'**il comprend deux sources primaires (16, 161, 162) distinctes pour l'alimentation en énergie électrique des dispositifs électroniques (26) des sondes de mesure (141, 142, 143, 144).

16. Système selon l'une quelconque des revendications précédentes prise en combinaison avec la revendication 2, dans lequel les canaux d'un système de données (SA, S_{B}, S_{C}, S_{D}) donné sont alimentés au moins par la même source primaire (16, 161, 162).

17. Système selon l'une quelconque des revendications précédentes, dans lequel chaque sonde de mesure (141, 142, 143, 144) comprend un module de contrôle (34) raccordé à au moins deux autres sondes de mesure (141, 142, 143, 144) et configuré pour fournir une information d'état de fonctionnement de la sonde de mesure à laquelle il appartient à partir de la comparaison entre les estimations des paramètres de vol fournies par les systèmes de données (SA, S_{B}, S_{C}, S_{D}).

18. Aéronef, **caractérisé en ce qu'**il comprend un système d'estimations de paramètres de vol (10) selon l'une quelconque des revendications précédentes.

## Revendications modifiées

### Revendications modifiées conformément à la règle 137(2) CBE.

**1.** Système d'estimation de paramètres de vol d'un aéronef (12), comprenant
- une pluralité de prises de pression statique (281-1, 281-2, 282-1, 282-2, 283-1, 283-2, 284-1, 284-2);
- une pluralité de sondes de mesure, chaque sonde de mesure comprenant une partie aérienne (24) propre à fournir au moins une grandeur physique corrélée aux paramètres de vols et différente de la pression statique, et un dispositif électronique (26) configuré pour estimer les paramètres de vols à partir des grandeurs physiques et d'au moins une mesure de pression statique ;
dans lequel :
- une première sonde de mesure (141) et une deuxième sonde de mesure (142) possèdent des parties aériennes (24) identiques et des dispositifs électroniques (26) identiques ;
- une troisième sonde de mesure (143) possède une partie aérienne (24) et un dispositif électronique (26) différents de ceux de la première sonde de mesure (141) et de la deuxième sonde de mesure (142) ;
- les dispositifs électroniques de la première sonde de mesure, de la deuxième sonde de mesure et de la troisième sonde de mesure et les prises de pression statique sont reliés de telle manière à former un premier système de données (S_{A}), un deuxième système de données (S_{B}) et un troisième système de données (S_{C}) respectivement associés à au moins une prise de pression statique,
- la ou chaque prise de pression statique de chacun du premier système de données (S_{A}), du deuxième système de données (S_{B}) et du troisième système de données (S_{C}) est distincte de la ou chaque prise de pression statique des autres parmi le premier système de données, le deuxième système de données et le troisième système de données,
**caractérisé en ce que** les systèmes de données (SA, S_{B}, S_{C}) fournissent chacun une estimation respective des mêmes paramètres de vol.

**2.** Système selon la revendication 1, dans lequel le dispositif électronique (26) de chaque sonde de mesure comprend un premier canal électronique (141-1, 142-1, 143-1, 144-1) et un deuxième canal électronique, (141-2, 142-2, 143-2, 144-2) chacun du premier système de données (S_{A}), du deuxième système de données (S_{B}) et du troisième système de données (S_{C}) comprenant un premier canal d'une sonde de mesure et un deuxième canal d'une sonde de mesure connectés entre eux.

**3.** Système selon la revendication 2, dans lequel le premier système de données (SA) comprend le premier canal (141-1) de la première sonde de mesure (141) et le deuxième canal (142-2) de la deuxième sonde de mesure (142) connectés entre eux, et le deuxième système de données (S_{B}) comprend le deuxième canal (141-2) de la première sonde de mesure (141) et le première canal (142-1) de la deuxième sonde de mesure (142) connectés entre eux.

**4.** Système selon la revendication 3, dans lequel le premier système de données (SA) comprend une prise pression statique (281-1) sur la partie aérienne (24) de la première sonde de mesure (141) et une prise de pression statique (282-2) disposée sur la partie aérienne (24) de la deuxième sonde de mesure (142), et dans lequel le deuxième système de données (S_{B}) comprend une prise de pression statique (282-1) disposée sur la partie aérienne (24) de la deuxième sonde de mesure (142) et une prise de pression statique (281-2) disposée sur la partie aérienne (24) de la première sonde de mesure (141).

**5.** Système selon la revendication 2, dans lequel le premier système de données (SA) comprend le premier canal (141-1) de la première sonde de mesure (141) et le deuxième canal (141-2) de la première sonde de mesure (141), et dans lequel le deuxième système de données (S_{B}) comprend le premier canal (142-1) de la deuxième sonde de mesure (142) et le deuxième canal (142-2) de la deuxième sonde de mesure (142).

**6.** Système selon la revendication 5, comprenant deux sondes de pression statique primaires (20A) disjointes des sondes de mesure et situées de part et d'autre de l'aéronef, les prises de pression statique du premier système de données (SA) étant situées sur l'une et l'autre desdites sondes de pression statique primaires (20A) et étant raccordées entre elles.

**7.** Système selon la revendications 5 ou 6, comprenant en outre deux sondes de pression statique secondaires (20B) distinctes des sondes de mesure et situées de part et d'autre de l'aéronef, les prises de pression statique du deuxième système de données (S_{B}) étant situées sur l'une et l'autre desdites sondes de pression statique secondaires (20B) et étant raccordées entre elles.

**8.** Système selon l'une quelconque des revendications 1 à 8, comprenant deux sondes de pression statique (20) disjointes des sondes de mesure et situées de part et d'autre de l'aéronef, les prises de pression statique du troisième système de données (S_{C}) étant situées sur lesdites sondes de pression statique (20) et étant raccordées entre elles.

**9.** Système selon l'une quelconque 2 à 8, dans lequel le troisième système de données comprend le premier canal (143-1) et le deuxième canal (143-2) de la troisième sonde de mesure (143).

**10.** Système selon l'une quelconque des 2 à 9, comprenant en outre une quatrième sonde de mesure (144) identique à la troisième sonde de mesure (143).

**11.** Système selon la revendication 10, comprenant un quatrième système de données (S_{D}) associé à au moins une prise de pression statique.

**12.** Système selon la revendication 11, dans lequel le quatrième système de données (S_{D}) comprend au moins une prise de pression statique commune avec le troisième système de données (S_{C}).

**13.** Système selon la revendication 10, 11 ou 12, dans lequel :
- le troisième système de données (S_{C}) comprend le premier canal (143-1) de la troisième sonde de mesure (143) et le deuxième canal (144-2) de la quatrième sonde de mesure (144) connectés entre eux ; et
- le quatrième système de données (S_{D}) comprend le deuxième canal (143-2) de la troisième sonde de mesure (143) et le premier canal (144-1) de la quatrième sonde de mesure (144) reliés entre eux.

**14.** Système selon les revendications 11, 12 ou 13 combinées à la revendication 8, comprenant deux sondes de pression statiques tertiaires (20C) disjointes des sondes de mesure et situées de part et d'autre de l'aéronef, les prises de pression statique du quatrième système de données (S_{D}) étant situées sur l'une et l'autre des sondes de pression statique tertiaires (20C) et étant raccordées entre elles.

**15.** Système selon l'une quelconque des revendications précédentes, **caractérisé en ce qu'**il comprend deux sources primaires (16, 161, 162) distinctes pour l'alimentation en énergie électrique des dispositifs électroniques (26) des sondes de mesure (141, 142, 143, 144).

**16.** Système selon l'une quelconque des revendications précédentes prise en combinaison avec la revendication 2, dans lequel les canaux d'un système de données (SA, S_{B}, S_{C}, S_{D}) donné sont alimentés au moins par la même source primaire (16, 161, 162).

**17.** Système selon l'une quelconque des revendications précédentes, dans lequel chaque sonde de mesure (141, 142, 143, 144) comprend un module de contrôle (34) raccordé à au moins deux autres sondes de mesure (141, 142, 143, 144) et configuré pour fournir une information d'état de fonctionnement de la sonde de mesure à laquelle il appartient à partir de la comparaison entre les estimations des paramètres de vol fournies par les systèmes de données (SA, S_{B}, S_{C}, S_{D}).

**18.** Aéronef, **caractérisé en ce qu'**il comprend un système d'estimations de paramètres de vol (10) selon l'une quelconque des revendications précédentes.
